# EUROPEAN PATENT SPECIFICATION

(11) **EP 4 061 606 B1**
(45) Date of publication and mention of the grant of the patent: **01.11.2023**
(21) Application number: 20829674.9
(22) Date of filing: 18.12.2020
(51) Int. Cl.: B29C 45/33, B29C 45/44, B29C 45/73, B29C 45/40

(54) **SABER-LIKE ELEMENT FOR THERMOPLASTIC MOLDS**
SÄBELÄHNLICHES ELEMENT FÜR THERMOPLASTISCHE FORMEN
ÉLÉMENT DE TYPE SABRE POUR MOULES THERMOPLASTIQUES

(30) Priority: 23.12.2019 IT 201900025219
(43) Date of publication of application: 28.09.2022
(73) Proprietor: ADM S.r.l., 00198 Roma (RM) (IT)
(72) Inventor: DI MAIO, Antonio, 00198 Roma (RM) (IT)
(74) Representative: Fiammenghi, Eva
(86) International application number: PCT/IB2020/062194
(87) International publication number: WO 2021/130633

(56) References cited:
- EP-A1- 2 286 974
- EP-A2- 3 542 984
- CN-B- 102 873 838
- ES-A1- 2 220 158
- FR-A1- 3 073 442
- KR-B1- 100 887 386
- US-A1- 2017 355 118

## Description

### Field of the art

The present invention operates in the field of components for thermoplastic molds. Still more in detail, the component to which the present invention makes reference is termed, in technical jargon, "saber-like element" and consists of a mechanism for the extraction of the part from the mold, possibly in undercut, at the end of the molding.

### Prior art

Presently, by means of the industrial process of injection molding of plastic polymers, increasing numbers of complex plastic components are produced.

Many also have shapes with corners in undercut. The extraction of such objects from the mold, once opened, must be executed by means of extractors which lift the plastic component, by now solidified. Several types of extractors for releasing the undercuts are in jargon termed "saber-like elements", and various types thereof are present on the market.

For a correct operation of the saber-like element, it is essential that this be precisely adjusted, i.e. it is lifted and retracted by the exact size in order to not project from the mold, when closed. It is also important that the saber-like element not be overheated in a manner different from the mold, since its contact with the molded component could create surface defects.

Depending on the requirements, therefore, saber-like elements of height-adjustable type that are cooled by a dedicated circuit are already present on the market; nevertheless, the Applicant has identified several critical issues that are common to the lifting systems presently on the market, which the present invention intends to resolve.

Such critical issues can be summarized in the following main points:

### 1) System for adjusting the height of the rod of the saber-like element

The systems presently on the market, for the adjustment of the height of the rod, are provided with mechanisms with a stop abutment on the clamping between the nut and mechanical locknut. It follows that such mechanism could be moved during the working cycle or during a disassembly for maintenance. The saber-like elements not provided with an adjustment system require adjusting, a rather complex process, with consequent losses of time and productivity during the construction process of a mold.

### 2) Cooling system

The cooling circuit is constrained to the rod-carrier carriage and any modification of the saber-like element, in several embodiments linked to the prior art, involve the need for disassembling the entire cooling circuit and hence, during remounting, newly assembling it.

In addition, the presence of a circuit for the water could involve oxidation, which could contribute to wedging the coupling of the saber-like element in the relative rod-carrier carriage, blocking it.

A further critical issue belonging to the prior art is the mounting and the disassembly of the cooled saber-like element which often causes damage to the gaskets, rubbing and friction which ruin the components. Still today, in many saber-like elements being used, blocking phenomena between the rod and the rod-carrier persist, which require drastic maneuvers for the saber-like element, in order to eliminate this rubbing and release the object, but which involve the possibility of seizure/galling.

With regard to the disassembly, there is once again the problem of the disassembly of the cooling circuit, when present.

### 3) Bulk

Presently, the system of connection between the rod and the rod-carrier requires considerable bulk in the mold volume. Sometimes it is necessary to have at least two saber-like lifting elements that are very close, but due to the volume of the entire system it is very difficult to mount two saber-like elements in a limited area.

### 4) Geometry of the rod

Presently, rods on the market are all cylindrical. If it was necessary to have a different geometry, molding professionals are used to making on their own the rod with prismatic section that they require. In particular the rods with prismatic section are necessary for small sliding sizes. The autonomous production of the necessary saber-like element is clearly not an optimal solution, both regarding the costs and the production times, and regarding the non-simple adaptability of saber-like elements produced as a "single piece" to the connection mechanisms of the standard components.

Some prior documents belong to the same technical field, such as FR3073442A1, US2017/355118A1, CN102873838B, Ep3542984A2, EP2286974A1, ES2220158A1 and KR100887386B1, but none of these can solve the technical problems cited above that our invention solves.

### Description of the invention

According to the present invention, a cooled saber-like lifting element for thermoplastic molds is attained that effectively solves the abovementioned problems.

The saber-like element of the present invention, like the others that can be found on the market, is constituted by a rod whose lower end is adapted to be partially inserted in a rod-carrier carriage device, while the upper end is engaged with an insert. In the preferred embodiment, the insert is interchangeable with others of different shape by means of a common mechanical system since it is directly correlated with the geometry to be molded.

The rod-carrier carriage device is laterally connected to a pair of sliding plates and on the lower part to a fixing screw.

In the preferred but non-binding embodiment of the present invention, unlike the sliding plates of the prior art, which establish a sliding friction with the rod-carrier, those of the present invention are advantageously configured with a hinge-like constraint adapted to allow 2 degrees of freedom to said rod-carrier device, generating a rolling friction and hence protecting the mechanism from possible blocking.

The rod, which can have circular or prismatic section, is adapted to be reversibly inserted within the suitable recess of the rod-carrier carriage.

More in detail the rod has an upper portion, an intermediate portion, a lower portion and a final threaded portion, which have diameters (or they are inscribable in diameters) that are decreasing.

The intermediate portion is delimited on the upper part by a seat for sealing gaskets. The lower portion includes a further seat for a sealing gasket.

Advantageously, said seats have a rounded section adapted to prevent the formation of cracks. At the threaded final portion of the rod, an adjustment nut is advantageously engaged in an adjustable manner; such adjustment nut is adapted to be engaged with an abutment profile of the recess of the rod-carrier, stopping the descent of the rod and adjusting the closure of the saber-like element insert with the relative coupling seat.

The recess of the rod-carrier carriage is thus configured in four sections, corresponding to the four sections of the rod, with sections with diameter (or inscribable in a diameter) that are decreasing from top to bottom. In particular it comprises:
- an upper portion adapted to be engaged with said upper portion of the rod, maintaining a certain movement tolerance. In particular, when said rod is inserted in the rod-carrier, a first contact area with carriage-like constraint is generated in the upper portion;
- an intermediate portion adapted to be engaged with said intermediate portion of the rod. When the rod is inserted within the rod-carrier, a second contact area with carriage-like constraint is generated in the intermediate portion;
- a lower portion adapted to house the lower portion of the rod with a certain movement tolerance. This portion is provided on the lower part, at the edge of coupling with the lower portion, with an abutment profile which is engaged with said adjustment nut, stopping the insertion of the rod in the rod-carrier;
- a final portion adapted to house the threaded final portion of the rod with a certain movement tolerance, and adapted to be engaged with the fixing screw (if present).

It is important to specify that, between the diameter of the intermediate portion of the rod and the diameter of the intermediate portion of the rod-carrier, an air space (tolerance) is present that is adapted to allow the vertical sliding of the rod, preventing the contact and the wear of said gaskets. More in detail, the two gaskets are situated between the first and second contact area, protecting them from wear.

Advantageously, at the rod-carrier device, a cooling circuit is also present that is adapted to carry coolant water within the recess, cooling the rod and the insert. When the saber-like element is mounted, the cooling circuit has the outlet nozzles for the water at the upper portion of the recess and hence at the intermediate portion of the rod.

Advantageously, all the components of the saber-like element described up to now are made, in the preferred version, of stainless steel. In particular, the rod-carrier rod will have a coating adapted to reduce the friction between the components in contact.

In addition, in the preferred variant of the invention, said rod is provided with external grooves adapted to be filled with any one substance adapted to facilitate the sliding, such as for example grease.

Among the main advantages of the invention, in each of its possible embodiments, it must be underlined that the entire mechanism of the saber-like element is extractable from the mold and adjustable (by adjusting or substituting the adjustment nut) even with the mold mounted. Hence there is no need for long disassembly times for the adjustment and the maintenance of the saber-like element.

More in detail, analyzing the critical points encountered in the prior art, the advantageous solutions and improvements that the saber-like element of the present invention brings are listed hereinbelow:

### 1) System for adjusting the height of the rod of the saber-like element

The extraction of the rod from the rod-carrier device of the saber-like element, in order to adjust the height thereof, is extremely easy and quick. It does not require the disassembly of the entire saber-like element and due to the expedients that prevent errors of remounting, the return in operation of the saber-like element with the height adjusted is very easy for any operator, even those who are not experts.

The stop abutment of the rod in the rod-carrier, in fact, is a mechanical stop of the adjustment nut against a suitable abutment arranged in the recess of the rod-carrier device. In order to fasten all of the above, it will suffice to clamp the lower screw of the rod-carrier device.

### 2) Cooling system

The cooling system, when present, has been designed to be fixed within the mold and thus it does not require being disassembled together with the rod. This involves numerous advantages in terms of time and of wear of the cooling circuit.

### 3) Bulk

Among the main advantages of the present invention, there is the reproducibility thereof in systems also with very small diameters, with bulk clearly smaller than the known saber-like elements. This allows particularly advantageous embodiments, constituted for example also by two or more saber-like lifting elements in a very limited area of the same mold.

### 4) Geometry of the rod

The system described hereinbelow, object of the protective scope offered by the present patent, has the advantage of being reproducible for any geometric form of the rod.

As previously indicated, in fact, only saber-like elements with cylindrical section can be found on the market, while the particular technical expedients that will be described hereinbelow in order to define the invention are applicable to saber-like elements with section of any geometry. In addition, presently simplified prismatic saber-like elements, like that which is the object of the present invention, do not exist: indeed, this is a rod with an attachment adjustable to standard components of the saber-like element.

In fact, a system is provided for the immediate centering between the insert and the rod, adaptable to all the sizes and shapes of the saber-like element, particularly useful in the case of saber-like elements with prismatic section.

In addition, advantageously, a rod with prismatic section can be inserted in a rod-carrier having recess with cylindrical shape, giving rise to a saber-like element with mixed shape: half cylindrical and half prismatic, maintaining unchanged the advantages that the invention involves.

Advantageously the present invention involves further additional improvements with respect to those encountered in the prior art, which are the following:

### 5) System for moving the rod-carrier carriage

A further very important advantage that the invention brings is the possibility to integrate a system with rolling friction rather than sliding friction.

The sliding mechanism of the rod can be defined "anti-seizure/anti-galling" since it slides on a cylindrical bushing that generates a rolling friction constraint. Such type of constraint, with respect to that of sliding friction, allows 1 degree of freedom more, which allows obtaining a more flexible system that gives the necessary movement tolerance, in case of start of seizure/galling, in order to release the mechanism.

### 6) Gasket protection system

Also the expedients of the cooling circuit are adapted to protect the sealing gaskets from wear during the step of mounting and disassembly of the rod. Due to a combination of tolerances, they are always protected from possible contacts with walls that are not those of their direct seat, hence preventing possible rubbing and breakage on the gaskets. In addition, all the edges that the gaskets encounter along the mounting/disassembly path are suitably rounded.

### 7) Anti-crack system

The rod-carrier device is in fact suitably sized in order to prevent the onset of cracks from the grooves present on the rod and the grooves present on the rod are all suitably beveled.

### 8) Possibility of errors in mounting

Due to the geometrical details that characterize the rod and the rod-carrier, it is impossible for the operator charged with the disassembly and subsequent remounting of the rod and of the rod-carrier to err regarding the insertion direction.

### 9) Flexibility of use

Advantageously, the system of the present invention is adaptable for use with the products that that can already be found on the market. Such advantageous characteristic is reflected in particular on the rods with prismatic section which, up to now, have never been made modular, like that of the present invention.

Moreover, it is always compatible with all the standard components that can already be found on the market, due to the particular specially-designed mechanical attachments.

Also the materials for making the components of the saber-like element of the present invention have been designed and improved with respect to the prior art. In order to prevent aggressions by limescale and rust, the ideal material is quenched stainless steel. With this, the rod-carrier device is advantageously attained. Nevertheless, the quench hardening process renders the steel excessively rigid and hence subjected to breakage of fragile nature. For such reason, the rod might not be made of the same material. A "coating" has thus been designed that is specific for the rod of the saber-like element. This consists of a coating of the rod which confers characteristics thereto that reduce the friction, anti-rust and anti-limescale characteristics, particularly useful in the case of presence of a cooling system.

The advantages offered by the present invention are evident in light of the description set forth above and will be even clearer due to the enclosed figures and to the relative detailed description.

### Description of the figures

The invention will be described hereinbelow in at least a preferred embodiment, as a non-limiting example with the aid of the enclosed figures, in which:
- FIGURE 1 shows a three-dimensional view of a saber-like element 100 according to the present invention.
- FIGURE 2 illustrates an axonometric exploded view of the saber-like element 100 of the preceding figure.

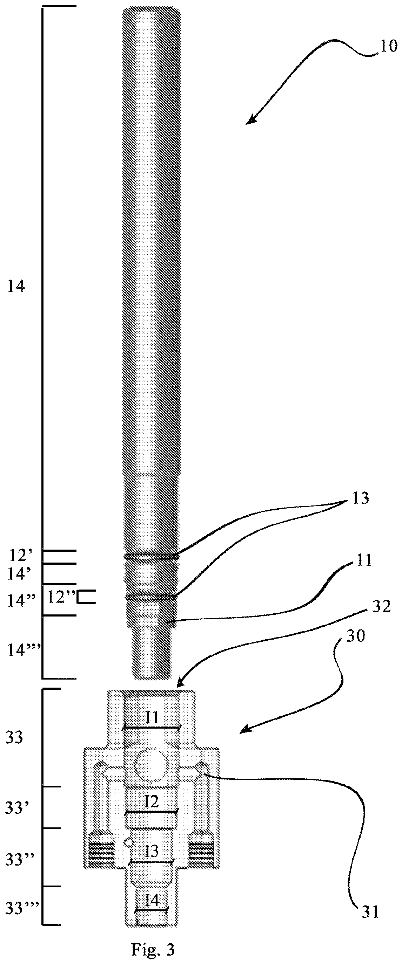

- FIGURE 3 shows more in detail the components of rod 10 and rod-carrier 30.

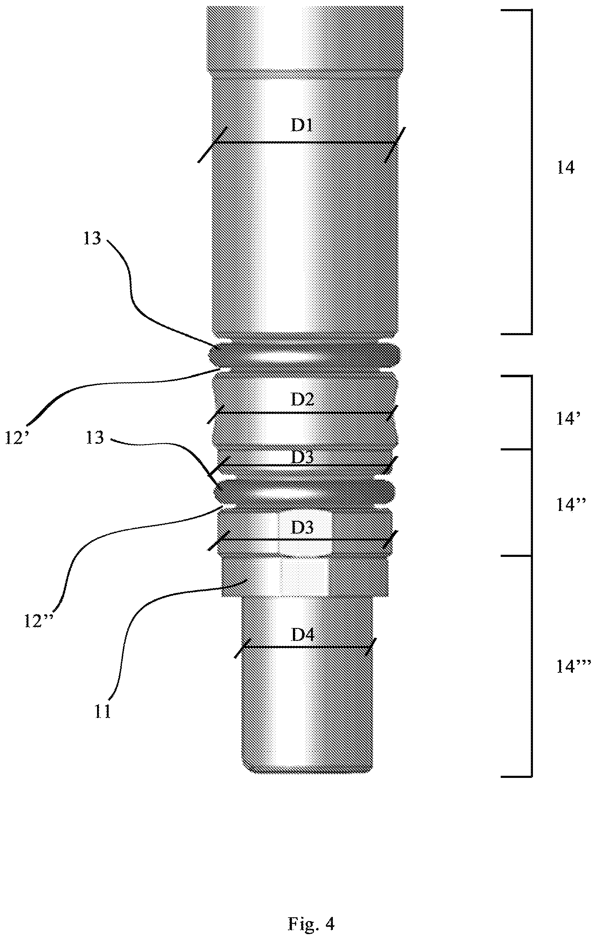

- FIGURE 4 depicts the size ratios between the various components of the portion of rod 10 to be inserted in the rod-carrier 30.

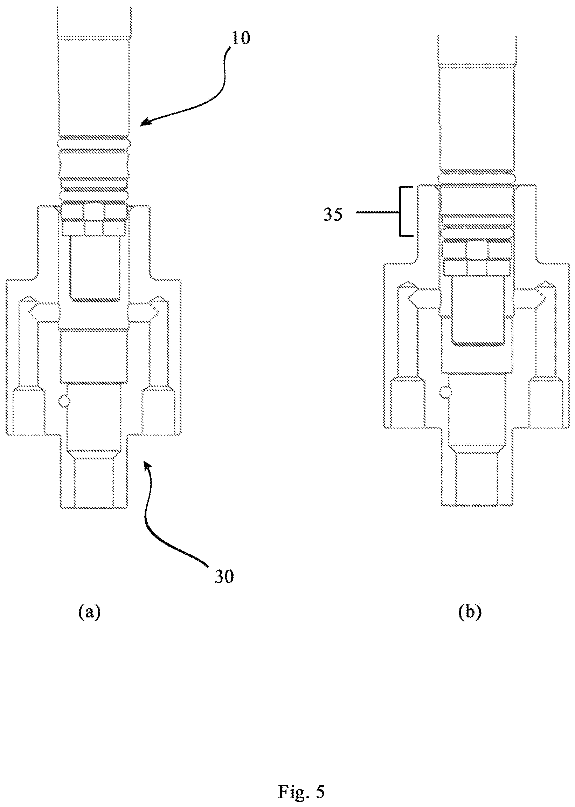

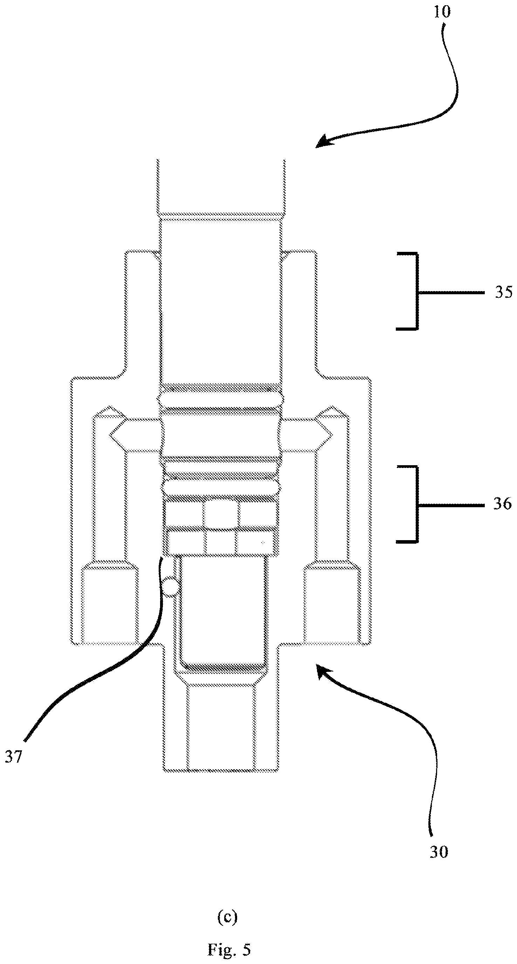

- FIGURE 5 shows in three steps (Fig. 5(a); Fig. 5(b); Fig. 5(c)) the insertion of the rod 10 in the relative rod-carrier device 30.

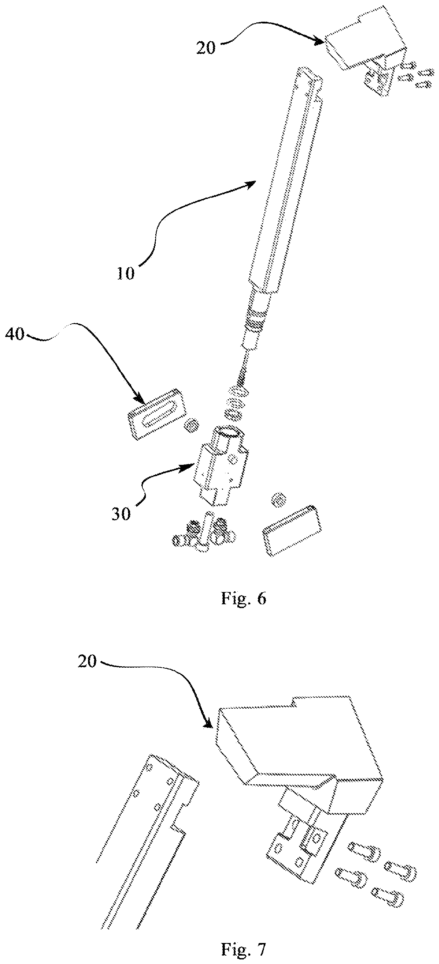

- FIGURE 6 shows the prismatic version of the rod 10 of the present invention.
- FIGURE 7 shows the reversible connection between the insert 20 and the rod 10 in its prismatic version.

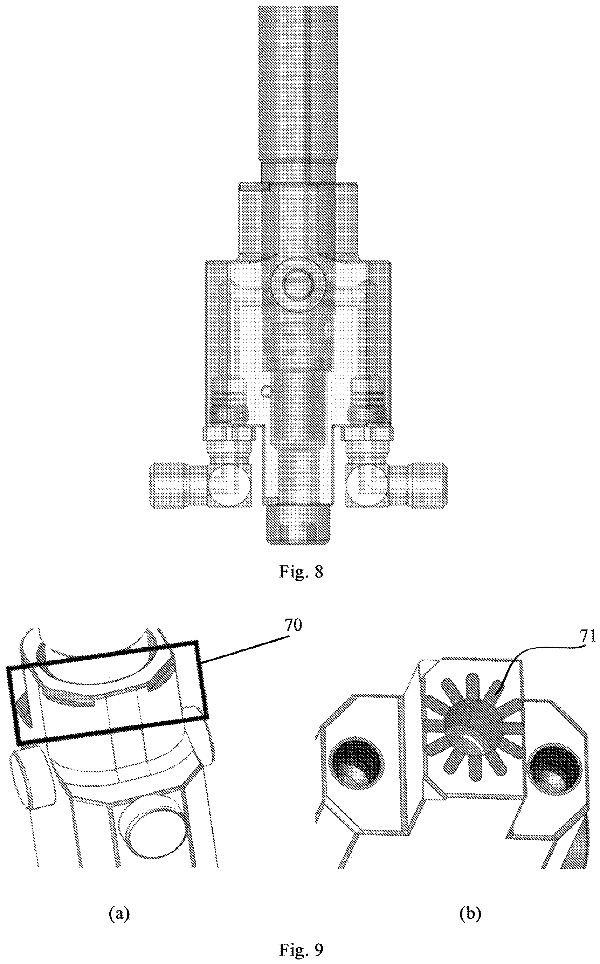

- FIGURE 8 once again shows the rod 10 - rod-carrier device 30 - cooling system 31 assembly, in the assembled configuration. From the transparent elements, the particular accuracy of the diameters is inferred such that the objects of the present invention are achieved.
- FIGURE 9 shows the rounded parts 70 specially created for preventing errors during the mounting of the rod-carrier and the anti-unscrewing channels 71 suitably made for further ensuring the clamping of the rod with its screw.

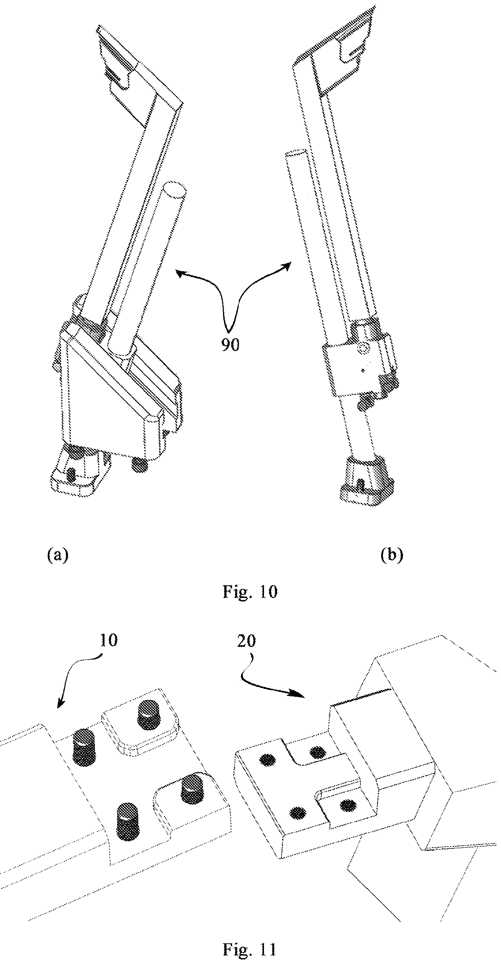

- FIGURE 10 illustrates the locking pin 90 included in one of the variants of the present invention, in particular used for exit angles of the rod with respect to the mold opening axis that are greater than 20°.
- FIGURE 11 represents more in detail the reversible mechanism of centering and connection between a rod 10, in this case prismatic, and an insert 20 of any shape.

### Detailed description of the invention

The present invention will now be illustrated as a merely non-limiting or non-binding example, with reference to the figures which illustrate several embodiments relative to the present inventive concept.

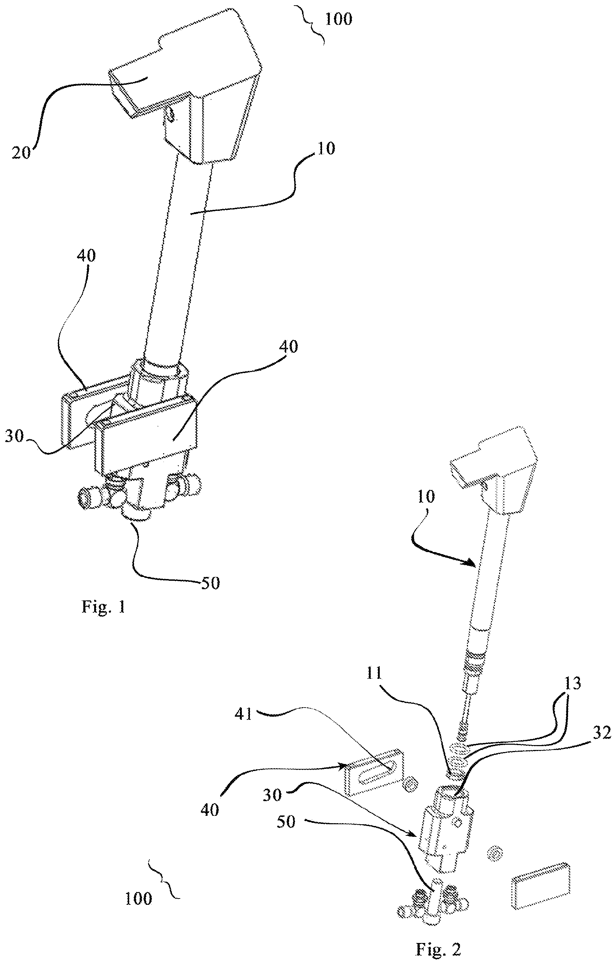

With reference to FIG. 2, all the components of a cylindrical saber-like element 100 are shown according to the preferred embodiment of the present invention.

At the top, the insert 20 is indicated which can have any shape and is interchangeable with others provided with the same mechanical system of connection to the upper end of the rod 10, whatever this is.

Meanwhile, the lower end is constituted by an upper portion 14 having the largest diameter D1, below this an intermediate portion 14' has a smaller diameter D2; below the latter, a lower portion 14", just above the position of the locking nut 11, has a diameter D3 that is even smaller. The rod 10 also comprises a threaded final portion 14‴ with a final diameter D4 smaller than all the other diameters.

Between the upper portion 14 and the intermediate portion 14', a first seat 12' is present for a gasket such as, for example, an O-ring 13. Likewise, at the lower portion 14", a second seat 12" is arranged for a second O-ring 13.

In order to prevent the formation of cracks, the section of the seats 12'-12" is rounded, i.e. completely lacking sharp corners.

The threaded final portion 14‴ of the rod 10 is engaged with an adjustment nut 11 which, when inserted in the recess 32 of the rod-carrier device 30, encounters an abutment profile 37. The adjustment of the height of the nut 11 on the rod 10 will thus determine the projection of the rod 10 and of the relative insert 20.

Also the recess 32 of the rod-carrier device 30 is configured in four sections corresponding to the four portions of the rod 10 plus an upper rounded part and two intermediate parts that act as a slide during the coupling.

An upper portion 33 has the largest diameter I1. Below this, an intermediate portion 33' has a smaller diameter I2 and, below this, a lower portion 33" has an even smaller diameter I3. The final portion 33‴ of the rod-carrier 30 finally has a fourth diameter I4 that is smaller than all the others, adapted to house the final portion 14‴ of the rod 10.

The size ratios between the diameters of the rod and the diameters of the rod-carrier have been designed to allow the vertical sliding of the rod 10, preventing the contact and the wear of said gaskets 13.

In particular, defining A as the coupling tolerance between the diameters of the rod, the diameters of the rod-carrier device and all the diameters that are encountered during the mounting and the disassembly of the rod 10 in the rod-carrier 30 and from the mold, and defining B as the tolerance between gaskets 13 and all the diameters that are encountered during the mounting and the disassembly of the rod 10 in the rod-carrier 30 and from the mold, are such that A is always smaller than B.

In addition, the contact area 35 between the rod-carrier 30 and the rod 10 is suitably adjusted with respect to the diameter and height in a manner such to prevent the formation of cracks due to the bending of the rod during the working thereof.

Such constraint allows the vertical sliding of rod 10 and rod-carrier 30 but prevents the bending of the portion of rod 10 that is situated between the two contact areas 35-36, thus preventing tensions in the portion affected by the two gaskets 13.

For the cooling of the system, the rod-carrier device 30, in its preferred embodiment, also comprises a cooling circuit 31 provided with outlet nozzles for water at said upper portion 33 of the recess 32.

A final, but not less important expedient, regards the sliding plates 40 which are engaged laterally to said rod-carrier device 30. These are configured, in the preferred embodiment, with a hinge-like constraint 41 adapted to allow 2 degrees of freedom, generating a rolling friction and hence protecting the mechanism from an early wear which would be due to a sliding friction.

Finally, it is clear that modifications, additions or variations that are obvious for a man skilled in the art can be made to the invention described above, without departing from the protective scope defined by the enclosed claims.

## Claims

1. Saber-like element (100) for thermoplastic molds, adapted to extract a molded component with possible undercuts from the relative mold; said saber-like element (100) being constituted by a rod (10) whose lower end is adapted to be partially inserted in a rod-carrier device (30), while the upper end is engaged with an insert (20); said rod-carrier device (30) being laterally connected with a pair of sliding plates (40); said rod (10) comprising:
- an upper or external portion (14) provided with section equal to or inscribable in a first diameter (D1);
- an intermediate portion (14') provided with section equal to or inscribable in a second diameter (D2) smaller than said first diameter (D1);
- a lower portion (14") provided with section equal to or inscribable in a third diameter (D3), smaller than said second diameter (D2);
- a threaded final portion (14‴) provided with section equal to or inscribable in a fourth diameter (D4), smaller than said third diameter (D3);
- at least a pair of seats (12'-12") adapted to be engaged with relative gaskets (13), preferably O-ring, said seats (12'-12") being positioned with one between said upper portion (14) and said intermediate portion (14') and the other within said lower portion (14");
- an adjustment nut (11), adapted to be engaged, in a stable and reversible manner, in a manner such that it can be adjusted at said final threaded portion (14‴), acting as a stop abutment with respect to the insertion of said rod (10) within a recess (32) of said rod-carrier device (30);
said rod-carrier device (30) comprising:
- said recess (32) adapted to be engaged, in a stable and reversible manner, with said lower portion (14"), said intermediate portion (14') and the lower end of said upper portion (14) of said rod (10); said recess (32) being configured in:
• an upper portion (33) provided with section equal to or inscribable in a first diameter (I1) adapted to be engaged, once the rod (10) has been inserted in said rod-carrier (30), with said upper portion (14) of said rod (10) with a certain movement tolerance;
when said rod (10) is inserted within said rod-carrier (30) in said upper portion (33), a first contact area (35) is generated between the two elements (10-30) adapted to generate a carriage-like constraint;
• an intermediate portion (33') provided with section equal to or inscribable in a second diameter (I2) smaller than said first diameter (I1), adapted to be engaged, once the rod (10) has been inserted in said rod-carrier (30), with said intermediate portion (14') of said rod (10);
when said rod (10) is inserted within said rod-carrier (30) in said intermediate portion (33'), a second contact area (36) is generated between the two elements (10-30), adapted to generate a carriage-like constraint;
• said lower portion (33") provided with section equal to or inscribable in a third diameter (13), smaller than said second diameter (I2), adapted to house, once the rod (10) has been inserted in said rod-carrier (30), said lower portion (14") of said rod (10) with a pre-established movement tolerance; said lower portion (33") being provided on the lower part, at the edge of connection with a final portion (33‴), with an abutment profile (37) adapted to be engaged with said adjustment nut (11), stopping the insertion of said rod (10) in said rod-carrier (30);
• said final portion (33‴) provided with section equal to or inscribable in a fourth diameter (I4), smaller than said third diameter (I3), adapted to house, once the rod (10) has been inserted in said rod-carrier (30), said final portion (14‴) of said rod (10) with a pre-established movement tolerance.

2. Saber-like element (100) for thermoplastic molds, according to the preceding claim 1, **characterized in that** said seats (12'-12") of said gaskets (13) have a rounded section adapted to prevent the formation of cracks.

3. Saber-like element (100) for thermoplastic molds, according to any one of the preceding claims 1 or 2, **characterized in that** between the diameter (D2) of the intermediate portion (14') of said rod (10) and the diameter (I2) of said intermediate portion (33') of said rod-carrier (30), a tolerance is present adapted to allow the vertical sliding of said rod (10), preventing the contact and wear of said gaskets (13).

4. Saber-like element (100) for thermoplastic molds, according to any one of the preceding claims, **characterized in that** said sliding plates (40) are configured with a hinge-like constraint (41) adapted to allow 2 degrees of freedom for said rod-carrier device (30), generating a rolling friction and hence protecting the mechanism from seizures/galling and from early wear.

5. Saber-like element (100) for thermoplastic molds, according to any one of the preceding claims, **characterized in that** said rod (10) has circular section.

6. Saber-like element (100) for thermoplastic molds, according to any one of the preceding claims 1 to 4, **characterized in that** said rod (10) has prismatic section with the final portion having circular section.

7. Saber-like element (100) for thermoplastic molds, according to any one of the preceding claims, **characterized in that** it comprises a fixing mechanism (50), such as a fixing screw (50), adapted to lock the position of the rod (10) with respect to said rod-carrier device (30).

8. Saber-like element (100) for thermoplastic molds, according to any one of the preceding claims, **characterized in that** said insert (20) is interchangeable with others of different shape; said insert (20) being connected to the upper portion (14) of said rod (10) by means of a common mechanical system compatible with the components that can be found on the market.

9. Saber-like element (100) for thermoplastic molds, according to any one of the preceding claims, **characterized in that** at least said rod (10) is made of stainless steel and/or with coating, adapted to render the surface stainless, unattackable by limescale and adapted to reduce the friction between the components in contact.

10. Saber-like element (100) for thermoplastic molds, according to any one of the preceding claims, **characterized in that** said rod (10) is provided with external grooves adapted to be filled with any one substance adapted to facilitate the sliding, such as grease.

11. Saber-like element (100) for thermoplastic molds, according to any one of the preceding claims, **characterized in that** it comprises rounded parts (70) or parts of any other geometric form suitably configured for guiding the operator in the correct insertion of said rod (10) in the relative rod-carrier device (30), preventing any error possibility.

12. Saber-like element (100) for thermoplastic molds, according to the preceding claim 11, **characterized in that** it comprises a further locking pin (90).

13. Saber-like element (100) for thermoplastic molds, according to any one of the preceding claims, **characterized in that** it comprises anti-unscrewing grooves (71).

14. Saber-like element (100) for thermoplastic molds, according to any one of the preceding claims, **characterized in that** it comprises a cooling circuit (31) adapted to carry coolant water within the recess (32) of said rod-carrier device (30), cooling said rod (10) and the possible insert; said cooling circuit (31) being provided with outlet nozzles for said water at said upper portion (33) of said recess (32).

15. Saber-like element (100) for thermoplastic molds, according to any one of the preceding claims, **characterized in that** it can be reversibly mounted and disassembled from the relative mold without disassembling the possible cooling plant, even with the mold mounted.

## Patentansprüche

1. Säbelähnliches Element (100) für thermoplastische Formen, das dazu geeignet ist, eine geformte Komponente mit möglichen Hinterschneidungen aus der entsprechenden Form zu extrahieren; wobei das säbelähnliche Element (100) durch einen Stab (10) gebildet ist, dessen unteres Ende geeignet ist, teilweise in eine Stabträgereinrichtung (30) eingeführt zu werden, während das obere Ende mit einem Einsatz (20) in Eingriff steht; wobei die Stabträgereinrichtung (30) seitlich mit einem Paar gleitender Platten (40) verbunden ist; wobei der Stab (10) aufweist:
- einen oberen oder äußeren Abschnitt (14), der mit einem Schnitt versehen ist, der gleich einem ersten Durchmesser (D1) ist oder in diesen eingeschrieben werden kann;
- einen Zwischenabschnitt (14'), der mit einem Schnitt versehen ist, der gleich einem zweiten Durchmesser (D2), der kleiner als der erste Durchmesser (D1) ist, ist oder in diesen eingeschrieben werden kann;
- einen unteren Abschnitt (14"), der mit einem Schnitt versehen ist, der gleich einem dritten Durchmesser (D3), der kleiner als der zweite Durchmesser (D2) ist, ist oder in diesen eingeschrieben werden kann;
- einen mit Gewinde versehenen Endabschnitt (14‴), der mit einem Schnitt versehen ist, der gleich einem vierten Durchmesser (D4), der kleiner als der dritte Durchmesser (D3) ist, ist oder in diesen eingeschrieben werden kann;
- zumindest ein Paar von Sitzen (12'-12"), die mit entsprechenden Dichtungen (13), vorzugsweise O-Ringen, in Eingriff gebracht werden können, wobei einer der Sitze (12'-12") zwischen dem oberen Abschnitt (14) und dem Zwischenabschnitt (14') und der andere innerhalb des unteren Abschnitts (14") angeordnet ist;
- eine Einstellmutter (11), die dazu geeignet ist, auf eine stabile und umkehrbare Weise so in Eingriff gebracht zu werden, dass sie an dem mit Gewinde versehenen Endabschnitt (14‴) eingestellt werden kann, wobei sie als Anschlag in Bezug auf das Einführen des Stabs (10) in eine Aussparung (32) der Stabträgereinrichtung (30) wirkt;
wobei die Stabträgereinrichtung (30) aufweist:
- die Aussparung (32), die dazu geeignet ist, auf eine stabile und umkehrbare Weise mit dem unteren Abschnitt (14"), dem Zwischenabschnitt (14') und dem unteren Ende des oberen Abschnitts (14) des Stabs (10) in Eingriff gebracht zu werden; wobei die Aussparung (32) gestaltet ist in:
• einen oberen Abschnitt (33), der mit einem Schnitt versehen ist, der gleich einem ersten Durchmesser (I1) ist oder in diesen eingeschrieben werden kann, der geeignet ist, mit dem oberen Abschnitt (14) des Stabs (10) mit einer bestimmten Bewegungstoleranz in Eingriff gebracht zu werden, nachdem der Stab (10) in den Stabträger (30) eingesetzt wurde;
wenn der Stab (10) innerhalb des Stabträgers (30) in den oberen Abschnitt (33) eingesetzt wird, wird eine erste Kontaktfläche (35) zwischen den beiden Elementen (10-30) erzeugt, die dazu geeignet ist, eine schlittenartige Zwängung zu erzeugen;
• einen Zwischenabschnitt (33'), der mit einem Schnitt versehen ist, der gleich einem zweiten Durchmesser (I2), der kleiner als der erste Durchmesser (I1) ist, ist oder in diesen eingeschrieben werden kann, und der dazu geeignet ist, mit dem Zwischenabschnitt (14') des Stabs (10) in Eingriff gebracht zu werden, nachdem der Stab (10) in den Stabträger (30) eingesetzt wurde;
wenn der Stab (10) innerhalb des Stabträgers (30) in den Zwischenabschnitt (33') eingesetzt wird, wird eine zweite Kontaktfläche (36) zwischen den beiden Elementen (10-30), die dazu geeignet ist, eine schlittenartige Zwängung zu erzeugen, erzeugt;
• der untere Abschnitt (33") mit einem Schnitt versehen ist, der gleich einem dritten Durchmesser (I3), der kleiner als der zweite Durchmesser (I2) ist, ist oder in diesen eingeschrieben werden kann und der geeignet ist, den unteren Abschnitt (14") des Stabs (10) mit einer vorgegebenen Bewegungstoleranz aufzunehmen, nachdem der Stab (10) in den Stabträger (30) eingesetzt wurde; wobei der untere Abschnitt (33") an dem unteren Teil am Rand der Verbindung mit einem Endabschnitt (33‴) mit einem Anschlagprofil (37) versehen ist, das geeignet ist, mit der Einstellmutter (11) in Eingriff gebracht zu werden und das Einsetzen des Stabs (10) in den Stabträger (30) stoppt;
• wobei der Endabschnitt (33‴) mit einem Schnitt versehen ist, der gleich einem vierten Durchmesser (I4), der kleiner als der dritte Durchmesser (I3) ist, ist oder in diesen eingeschrieben werden kann, und der dazu geeignet ist, den Endabschnitt (14‴) des Stabs (10) mit einer vorgegebenen Bewegungstoleranz aufzunehmen, nachdem der Stab (10) in den Stabträger (30) eingesetzt wurde.

2. Säbelähnliches Element (100) für thermoplastische Formen nach dem vorhergehenden Anspruch 1, **dadurch gekennzeichnet, dass** die Sitze (12'-12") der Dichtungen (13) einen abgerundeten Schnitt aufweisen, der geeignet ist, die Bildung von Rissen zu verhindern.

3. Säbelähnliches Element (100) für thermoplastische Formen nach einem der vorhergehenden Ansprüche 1 oder 2, **dadurch gekennzeichnet, dass** zwischen dem Durchmesser (D2) des Zwischenabschnitts (14') des Stabs (10) und dem Durchmesser (I2) des Zwischenabschnitts (33') des Stabträgers (30) eine Toleranz vorhanden ist, die geeignet ist, vertikales Gleiten des Stabs (10) zu ermöglichen und so den Kontakt und die Abnutzung der Dichtungen (13) verhindert.

4. Säbelähnliches Element (100) für thermoplastische Formen nach einem der vorhergehenden Ansprüche, **dadurch gekennzeichnet, dass** die gleitenden Platten (40) mit einer scharnierähnlichen Beschränkung (41) ausgebildet sind, die geeignet ist, 2 Freiheitsgrade für die Stabträgereinrichtung (30) zu ermöglichen, eine Rollreibung zu erzeugen und so den Mechanismus vor Festfressen/Abnutzung und vorzeitigem Verschleiß zu schützen.

5. Säbelähnliches Element (100) für thermoplastische Formen nach einem der vorhergehenden Ansprüche, **dadurch gekennzeichnet, dass** der Stab (10) einen runden Schnitt aufweist.

6. Säbelähnliches Element (100) für thermoplastische Formen nach einem der vorhergehenden Ansprüche 1 bis 4, **dadurch gekennzeichnet, dass** der Stab (10) einen prismatischen Schnitt aufweist, wobei der Endabschnitt einen runden Schnitt aufweist.

7. Säbelähnliches Element (100) für thermoplastische Formen nach einem der vorhergehenden Ansprüche, **dadurch gekennzeichnet, dass** es einen Befestigungsmechanismus (50) wie etwa eine Befestigungsschraube (50) aufweist, der geeignet ist, die Position des Stabs (10) in Bezug auf die Stabträgereinrichtung (30) zu verriegeln.

8. Säbelähnliches Element (100) für thermoplastische Formen nach einem der vorhergehenden Ansprüche, **dadurch gekennzeichnet, dass** der Einsatz (20) mit anderen von unterschiedlicher Form austauschbar ist; wobei der Einsatz (20) mit dem oberen Abschnitt (14) des Stabs (10) durch ein übliches mechanisches System verbunden ist, das mit den Komponenten, die auf dem Markt zu finden sind, kompatibel ist.

9. Säbelähnliches Element (100) für thermoplastische Formen nach einem der vorhergehenden Ansprüche, **dadurch gekennzeichnet, dass** zumindest der Stab (10) aus rostfreiem Stahl und/oder mit einer Beschichtung hergestellt ist, die geeignet ist, die Oberfläche rostfrei und durch Kalk unangreifbar zu machen, und die geeignet ist, die Reibung zwischen den in Kontakt stehenden Komponenten zu verringern.

10. Säbelähnliches Element (100) für thermoplastische Formen nach einem der vorhergehenden Ansprüche, **dadurch gekennzeichnet, dass** der Stab (10) mit äußeren Rillen versehen ist, die geeignet sind, mit einer beliebigen Substanz wie etwa Fett, die das Gleiten erleichtert, gefüllt zu werden.

11. Säbelähnliches Element (100) für thermoplastische Formen nach einem der vorhergehenden Ansprüche, **dadurch gekennzeichnet, dass** es abgerundete Teile (70) oder Teile mit einer anderen geometrischen Form aufweist, die geeignet ausgebildet sind, den Bediener beim korrekten Einführen des Stabs (10) in die entsprechende Stabträgereinrichtung (30) zu führen, wodurch jegliche Fehlermöglichkeit vermieden wird.

12. Säbelähnliches Element (100) für thermoplastische Formen nach dem vorhergehenden Anspruch 11, **dadurch gekennzeichnet, dass** es einen weiteren Verriegelungsstift (90) aufweist.

13. Säbelähnliches Element (100) für thermoplastische Formen nach einem der vorhergehenden Ansprüche, **dadurch gekennzeichnet, dass** es Ausdrehsicherungsnuten (71) aufweist.

14. Säbelähnliches Element (100) für thermoplastische Formen nach einem der vorhergehenden Ansprüche, **dadurch gekennzeichnet, dass** es eine Kühlschaltung (31) aufweist, die geeignet ist, Kühlwasser innerhalb der Aussparung (32) der Stabträgereinrichtung (30) zu fassen, um den Stab (10) und den möglichen Einsatz zu kühlen; wobei die Kühlschaltung (31) an dem oberen Abschnitt (33) der Aussparung (32) mit Auslassdüsen für das Wasser versehen ist.

15. Säbelähnliches Element (100) für thermoplastische Formen nach einem der vorhergehenden Ansprüche, **dadurch gekennzeichnet, dass** es reversibel montiert und von der entsprechenden Form demontiert werden kann, ohne die mögliche Kühlanlage zu demontieren, selbst wenn die Form montiert ist.

## Revendications

1. Elément de type sabre (100) pour moules thermoplastiques, apte à extraire un composant moulé avec de possibles contre-dépouilles du moule relatif ; ledit élément de type sabre (100) étant constitué d'une tige (10) dont une extrémité inférieure est apte à être partiellement insérée dans un dispositif porte-tige (30), tandis que l'extrémité supérieure est mise en prise avec un insert (20) ; ledit dispositif porte-tige (30) étant relié latéralement à une paire de plaques coulissantes (40) ; ladite tige (10) comprenant :
- une portion supérieure ou externe (14) pourvue d'une section égale à ou pouvant être inscrite dans un premier diamètre (D1) ;
- une portion intermédiaire (14') pourvue d'une section égale à ou pouvant être inscrite dans un deuxième diamètre (D2) plus petit que ledit premier diamètre (D1) ;
- une portion inférieure (14'') pourvue d'une section égale à ou pouvant être inscrite dans un troisième diamètre (D3) plus petit que ledit deuxième diamètre (D2) ;
- une portion finale filetée (14''') pourvue d'une section égale à ou pouvant être inscrite dans un quatrième diamètre (D4), plus petit que ledit troisième diamètre (D3) ;
- au moins une paire de sièges (12'-12'') aptes à être mis en prise avec des joints relatifs (13), de préférence un joint torique, lesdits sièges (12'-12'') étant positionnés l'un entre ladite portion supérieure (14) et ladite portion intermédiaire (14') et l'autre à l'intérieur de ladite portion inférieure (14") ;
- un écrou d'ajustement (11), apte à être mis en prise, d'une manière stable et réversible, afin de pouvoir être ajusté au niveau de ladite portion filetée finale (14'''), en servant de butée d'arrêt en ce qui concerne l'insertion de ladite tige (10) à l'intérieur d'un évidement (32) dudit dispositif porte-tige (30) ;
ledit dispositif porte-tige (30) comprenant :
- ledit évidement (32) apte à être mis en prise, d'une manière stable et réversible, avec ladite portion inférieure (14''), ladite portion intermédiaire (14') et l'extrémité inférieure de ladite portion supérieure (14) de ladite tige (10) ; ledit évidement (32) étant configuré dans :
• une portion supérieure (33) pourvue d'une section égale à ou pouvant être inscrite dans un premier diamètre (I1), apte à être mise en prise, une fois que la tige (10) a été insérée dans ledit dispositif porte-tige (30), avec ladite portion supérieure (14) de ladite tige (10) avec une certaine tolérance de mouvement ;
lorsque ladite tige (10) est insérée à l'intérieur dudit dispositif porte-tige (30) dans ladite portion supérieure (33), une première zone de contact (35) est générée entre les deux éléments (10-30), apte à générer une contrainte de type chariot ;
• une portion intermédiaire (33') pourvue d'une section égale à ou pouvant être inscrite dans un deuxième diamètre (12) plus petit que ledit premier diamètre (I1), apte à être mise en prise, une fois que la tige (10) a été insérée dans ledit dispositif porte-tige (30), avec ladite portion intermédiaire (14') de ladite tige (10) ;
lorsque ladite tige (10) est insérée à l'intérieur dudit dispositif porte-tige (30) dans ladite portion intermédiaire (33'), une deuxième zone de contact (36) est générée entre les deux éléments (10-30), apte à générer une contrainte de type chariot ;
• ladite portion inférieure (33'') pourvue d'une section égale à ou pouvant être inscrite dans un troisième diamètre (13), plus petit que ledit deuxième diamètre (12), apte à loger, une fois que la tige (10) a été insérée dans ledit dispositif porte-tige (30), ladite portion inférieure (14'') de ladite tige (10) avec une tolérance de mouvement préétablie ; ladite portion inférieure (33'') étant pourvue sur la partie inférieure, au niveau du bord de raccordement avec une portion finale (33'''), d'un profil de butée (37) apte à être mis en prise avec ledit écrou d'ajustement (11), arrêtant l'insertion de ladite tige (10) dans ledit dispositif porte-tige (30) ;
• ladite portion finale (33''') pourvue d'une section égale à ou pouvant être inscrite dans un quatrième diamètre (14), plus petit que ledit troisième diamètre (13), apte à loger, une fois que la tige (10) a été insérée dans ledit dispositif porte-tige (30), ladite portion finale (14‴) de ladite tige (10) avec une tolérance de mouvement préétablie.

2. Elément de type sabre (100) pour moules thermoplastiques selon la revendication 1, **caractérisé en ce que** lesdits sièges (12'-12'') desdits joints (13) présentent une section arrondie apte à empêcher la formation de fissures.

3. Elément de type sabre (100) pour moules thermoplastiques selon la revendication 1 ou 2, **caractérisé en ce que**, entre le diamètre (D2) de la portion intermédiaire (14') de ladite tige (10) et le diamètre (12) de ladite portion intermédiaire (33') dudit dispositif porte-tige (30), une tolérance est présente apte à permettre le coulissement vertical de ladite tige (10), en empêchant le contact et l'usure desdits joints (13).

4. Elément de type sabre (100) pour moules thermoplastiques selon l'une des revendications précédentes, **caractérisé en ce que** lesdites plaques coulissantes (40) sont configurées avec une contrainte de type charnière (41) apte à permettre 2 degrés de liberté pour ledit dispositif porte-tige (30), en générant un frottement de roulement et en protégeant de ce fait le mécanisme contre les saisies/le grippage et contre une usure précoce.

5. Elément de type sabre (100) pour moules thermoplastiques selon l'une des revendications précédentes, **caractérisé en ce que** ladite tige (10) présente une section circulaire.

6. Elément de type sabre (100) pour moules thermoplastiques selon l'une des revendications 1 à 4, **caractérisé en ce que** ladite tige (10) présente une section prismatique avec la portion finale présentant une section circulaire.

7. Elément de type sabre (100) pour moules thermoplastiques selon l'une des revendications précédentes, **caractérisé en ce qu'**il comprend un mécanisme de fixation (50), comme une vis de fixation (50), apte à verrouiller la position de la tige (10) par rapport audit dispositif porte-tige (30).

8. Elément de type sabre (100) pour moules thermoplastiques selon l'une des revendications précédentes, **caractérisé en ce que** ledit insert (20) est interchangeable avec d'autres de forme différente ; ledit insert (20) étant relié à la portion supérieure (14) de ladite tige (10) au moyen d'un système mécanique commun compatible avec les composants disponibles sur le marché.

9. Elément de type sabre (100) pour moules thermoplastiques selon l'une des revendications précédentes, **caractérisé en ce qu'**au moins ladite tige (10) est constituée d'acier inoxydable et/ou d'un revêtement, apte à rendre la surface inoxydable, inattaquable par le tartre et apte à réduire le frottement entre les composants en contact.

10. Elément de type sabre (100) pour moules thermoplastiques selon l'une des revendications précédentes, **caractérisé en ce que** ladite tige (10) est pourvue de rainures externes aptes à être remplies d'une substance apte à faciliter le coulissement, comme de la graisse.

11. Elément de type sabre (100) pour moules thermoplastiques selon l'une des revendications précédentes, **caractérisé en ce qu'**il comprend des parties arrondies (70) ou des parties d'une autre forme géométrique configurées de manière appropriée pour guider l'opérateur dans l'insertion correcte de ladite tige (10) dans le dispositif porte-tige (30) relatif, en empêchant ainsi toute possibilité d'erreur.

12. Elément de type sabre (100) pour moules thermoplastiques selon la revendication 11, **caractérisé en ce qu'**il comprend en outre une goupille de verrouillage (90).

13. Elément de type sabre (100) pour moules thermoplastiques selon l'une des revendications précédentes, **caractérisé en ce qu'**il comprend des rainures anti-dévissage (71).

14. Elément de type sabre (100) pour moules thermoplastiques selon l'une des revendications précédentes, **caractérisé en ce qu'**il comprend un circuit de refroidissement (31) apte à porter de l'eau de refroidissement à l'intérieur de l'évidement (32) dudit dispositif porte-tige (30), en refroidissant ladite tige (10) et l'insert possible ; ledit circuit de refroidissement (31) étant pourvu de buses de sortie pour ladite eau au niveau de ladite portion supérieure (33) dudit évidement (32).

15. Elément de type sabre (100) pour moules thermoplastiques selon l'une des revendications précédentes, **caractérisé en ce qu'**il peut être monté de manière réversible et démonté du moule relatif sans démonter l'installation de refroidissement possible, même avec le moule monté.
